# EUROPÄISCHE PATENTSCHRIFT

(11) **EP 0 671 872 B1**
(45) Veröffentlichungstag und Bekanntmachung des Hinweises auf die Patenterteilung: **09.04.1997**
(21) Anmeldenummer: 95102542.8
(22) Anmeldetag: 23.02.1995
(51) Int. Cl.: H05K 5/06, A61C 17/22

(54) **Gehäuse insbesondere für ein elektrisches Zahnreinigungsgerät sowie Verfahren zu dessen Herstellung**
Case for an electric toothbrush and its method of manufacture
Boîtier pour appareil électrique d'hygiène dentaire ainsi que sa méthode de fabrication

(30) Priorität: 09.03.1994 DE 4407782
(43) Veröffentlichungstag der Anmeldung: 13.09.1995
(73) Patentinhaber: Braun Aktiengesellschaft, Frankfurt am Main (DE)
(72) Erfinder: Kressner, Gerhard, D-64476 Altenstadt (DE); Hartwein, Peter, D-61476 Kronberg (DE); Spiekermann, Georg, A-5026 Salzburg (AT)

(56) Entgegenhaltungen:
- DE-B- 1 258 981
- FR-A- 1 414 679
- US-A- 3 143 697
- PATENT ABSTRACTS OF JAPAN, Bd. 13 Nr. 513 (E-847) ,16.November 1989 & JP-A-01 207993

## Beschreibung

Die Erfindung betrifft ein Gehäuse für ein elektrisches Gerät zur Körperpflege, insbesondere für ein Zahnreinigungsgerät, wobei in dem Gehäuse von einer Vergußmasse durch Einfüllen der Vergußmasse in das Gehäuse umgebene, elektrische Bauteile untergebracht sind, die mit einem elektrischen Kabel verbunden sind, das durch eine Kabelöffnung des Gehäuses hindurchgesteckt ist, sowie ein Verfahren zum Herstellen des Gehäuses.

Ein derartiges Gehäuse ist durch im Handel erhältliche elektrische Zahnreinigungsgeräte der Anmelderin bekannt. Dort ist in dem Gehäuse ein Kabelstauraum vorgesehen, der durch eine Zwischenwand von dem Bereich mit den elektrischen Bauteilen abgeteilt ist. In der Zwischenwand sind zwei Öffnungen enthalten, wobei durch eine der Öffnungen das mit den elektrischen Bauteilen verbundene, elektrische Kabel hindurchgesteckt ist. Die andere Öffnung dient bei der Herstellung des Gehäuses zum Einfüllen der Vergußmasse in den Bereich mit den elektrischen Bauteilen. Hierzu wird eine Einfüllvorrichtung in diese Öffnung hineingesteckt, so daß die flüssige Vergußmasse in das Innere des Gehäuses hineinfließen und die elektrischen Bauteile umgeben kann. Nach dem Einfüllen der Vergußmasse wird die Einfüllvorrichtung wieder abgezogen und das Gehäuse wird zum Aushärten der Vergußmasse abgestellt. Die Öffnung in der Zwischenwand bleibt bestehen, ohne einen weiteren Nutzen zu haben.

Aufgabe der Erfindung ist es, ein Gehäuse insbesondere für ein elektrisches Zahnreinigungsgerät und ein Verfahren zu dessen Herstellung zu schaffen, das hinsichtlich des erforderlichen Materialbedarfs sowie der erforderlichen Herstellschritte verbessert ist.

Gelöst wird die Aufgabe dadurch, daß bei einem Gehäuse der eingangs genannten Art die Kabelöffnung in einer Außenwand des Gehäuses angeordnet ist und die einzige Öffnung des Gehäuses zu den elektrischen Bauteilen darstellt.

Erfindungsgemäß ist die Kabelöffnung nicht mehr in einer Zwischenwand vorgesehen, sondern unmittelbar in der Außenwand des Gehäuses. Eine Zwischenwand oder dergleichen ist nicht mehr vorhanden. Die Funktion der Zwischenwand, also die Abtrennung der elektrischen Bauteile von dem Kabelstauraum, wird von der eingefüllten Vergußmasse übernommen. Die sich daraus ergebende Materialeinsparung sowie Verringerung der erforderlichen Herstellschritte ist offensichtlich.

Ein weiterer Vorteil besteht, wenn die Vergußmasse nicht nur die elektrischen Bauteile, sondern zumindest teilweise auch das elektrische Kabel umgibt. Auf diese Weise wird eine Zugentlastung für das elektrische Kabel bewirkt, so daß in dieser Hinsicht keine weiteren Vorkehrungen mehr getroffen werden müssen.

Des weiteren ist erfindungsgemäß nur noch eine einzige Öffnung zu den elektrischen Bauteilen vorgesehen, nämlich die genannte Kabelöffnung. Auch dies stellt insbesondere hinsichtlich der Herstellung des erfindungsgemäßen Gehäuses ersichtlich eine Verbesserung dar.

Durch diese Kabelöffnung kann das elektrische Kabel in den dahinter befindlichen Kabelstauraum je nach Bedarf eingeführt oder herausgeholt werden. Der Kabelstauraum hat dabei den Vorteil daß er, abgesehen von der Kabelöffnung, allseitig geschlossen ist und innen von im wesentlichen glatten Flächen gebildet wird. Das elektrische Kabel wird auf diese Weise geschützt und geschont.

Bei einer vorteilhaften Weiterbildung der Erfindung weist die Vergußmasse bei stehendem Gehäuse eine Oberfläche auf, die entweder etwa horizontal oder unter einem Neigungswinkel zur Horizontalen angeordnet ist. Insbesondere mit der zuletzt genannten Alternative, also mit einer geneigten Oberfläche der Vergußmasse, kann erreicht werden, daß einerseits die elektrischen Bauteile vollständig von der Vergußmasse umgeben und damit isoliert sind, daß aber andererseits eine geringere Menge an Vergußmasse als bisher in das Innere des Gehäuses eingefüllt werden muß. Dies hat nicht nur den Vorteil, daß der erforderliche Materialbedarf geringer ist, sondern ebenfalls, daß der Kabelstauraum größer wird.

Bei einer vorteilhaften Ausgestaltung der Erfindung sind im Inneren des Gehäuses Stützrippen vorgesehen, die zumindest teilweise mit Vergußmasse beschichtet sind. Die Beschichtung der Stützrippen mit Vergußmasse hat den Vorteil, daß das elektrische Kabel von den Stützrippen nicht beschädigt werden kann.

Besonders zweckmäßig ist es, wenn das elektrische Gerät zur Körperpflege einen wiederaufladbaren Akkumulator enthält und die elektrischen Bauteile zu einer elektrischen Aufladevorrichtung gehören. Im Falle eines elektrischen Zahnreinigungsgerätes kann ein Benutzer ein Handgerät mit einem rotierendem Borstenteil separat von der Netzspannung benutzen. Zum Aufladen des im Handgerät enthaltenen Akkumulators muß das Handgerät mit der Aufladevorrichtung verbunden werden. Dies kann beispielsweise mit Hilfe elektrischer Kontakte oder dergleichen erfolgen, wobei die erforderliche Aufladevorrichtung in dem erfindungsgemäßen Gehäuse untergebracht ist.

Bei einem Verfahren der eingangs genannten Art wird die genannte Aufgabe dadurch gelöst, daß die Vergußmasse mittels einer Einfüllvorrichtung durch die Kabelöffnung hindurch in das Gehäuse eingebracht wird.

Erfindungsgemäß hat also die Kabelöffnung eine Doppelfunktion. Einerseits dient sie als Öffnung für das elektrische Kabel. Andererseits wird aber auch die Vergußmasse durch die Kabelöffnung hindurch in das Innere des Gehäuses engefüllt. Zu diesem Zweck wird die Einfüllvorrichtung bei durchgestecktem elektrischen Kabel in die Kabelöffnung eingeführt und die flüssige Vergußmasse wird in das Innere des Gehäuses eingebracht. Ist die erforderliche Menge an Vergußmasse eingefüllt, so wird die Einfüllvorrichtung wieder abgezogen und die Vergußmasse kann erstarren. Die Oberfläche der erstarrten Vergußmasse kann danach eine der Flächen des Kabelstauraumes bilden. Ebenfalls kann in diese Oberfläche das durch die Kabelöffnung hindurchgesteckte und mit den elektrischen Bauteilen verbundene elektrische Kabel eintauchen.

Bei einer vorteilhaften Ausgestaltung der Erfindung wird das Gehäuse zum Einfüllen der Vergußmasse mittels einer Transportvorrichtung in eine Einfüllposition gebracht, die einen Einfüllwinkel zur Horizontalen aufweist. Auf diese Weise wird das Einfüllen der Vergußmasse in das Innere des Gehäuses wesentlich erleichtert.

Bei einer vorteilhaften Weiterbildung der Erfindung wird das Gehäuse zum Aushärten der Vergußmasse mittels der Transportvorrichtung entweder in eine etwa horizontale Position oder in eine Position gebracht, die einen Neigungswinkel zur Horizontalen aufweist. Auf diese Weise wird entweder die horizontale Oberfläche der Vergußmasse erzeugt oder die unter dem Neigungswinkel angeordnete Oberfläche.

Zweckmäßig ist es dabei, wenn das Gehäuse auf einer entsprechenden schiefen Ebene abgestellt wird. Dadurch kann in verfahrenstechnisch besonders einfacher Weise der jeweils erwünschte Neigungswinkel zum Einfüllen der Vergußmasse oder zum Aushärten der Vergußmasse realisiert werden. Die Transportvorrichtung mit dem Gehäuse wird hierzu nur die genannte schiefe Ebene hinauf oder hinunterbefördert und zum Einfüllen oder Aushärten der Vergußmasse auf der schiefen Ebene abstellt.

Weitere Vorteile und Anwendungsmöglichkeiten der Erfindung ergeben sich aus der nachfolgenden Beschreibung von Ausführungsbeispielen, die in der Zeichnung näher dargestellt sind.

Es zeigt:
- Fig. 1: eine schematische Darstellung eines Gehäuses eines elektrischen Zahnreinigungsgerätes in einer geschnittenen Seitenansicht, bei dem gerade Vergußmasse mittels einer Einfüllvorrichtung in das Innere des Gehäuses eingefüllt worden ist,
- Fig. 2: eine schematische Darstellung des Gehäuses der Fig. 1 in einer geschnittenen Seitenansicht, das bei einer ersten Ausführungsform zum Aushärten der Vergußmasse in einer horizontalen Position abgestellt worden ist,
- Fig. 3: eine schematische Darstellung des Gehäuses der Fig. 1 in einer geschnittenen Seitenansicht, das bei einer zweiten Ausführungsform zum Aushärten der Vergußmasse in einer geneigten Position abgestellt worden ist,
- Fig. 4: eine schematische Darstellung des Gehäuses der Fig. 1 in einer geschnittenen Draufsicht entlang der Ebene AA der Fig. 1, und
- Fig. 5: eine schematische Darstellung des Gehäuses der Fig. 1 in einer geschnittenen Vergrößerung des Details X der Fig. 4.

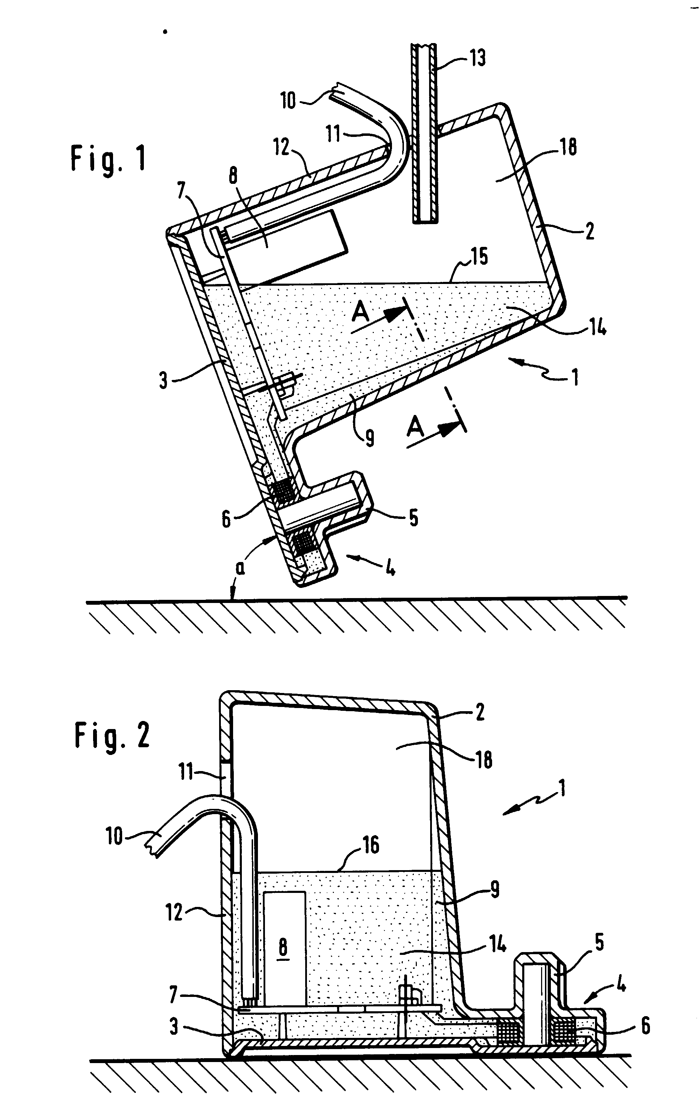

In der Fig. 1 ist ein Gehäuse 1 für ein elektrisches Zahnreinigungsgerät gezeigt.

Das Gehäuse 1 setzt sich im wesentlichen aus einem etwa becherförmigen Oberteil 2 und einem der Öffnung des Oberteils 2 zugeordneten, etwa ebenen Boden 3 zusammen. An einer Seite ist das Oberteil 2 ausgehend von einem Rand seiner Becherform mit einem abstehenden Auflageteil 4 versehen. Der Boden 3 erstreckt sich in den Bereich des Auflageteils 4 und verschließt die Öffnung des becherförmigen Oberteiles 2 und des Auflageteiles 4 vollständig. Von dem Auflageteil 4 steht ein Stutzen 5 mit rundem Querschnitt ab, der etwa in die gleiche Richtung zeigt wie die Becherform des Oberteils 2.

Wenn das Gehäuse 1 auf dem Boden 3 steht oder in dieser Position anderweitig befestigt ist, so weist der Stutzen 5 etwa vertikal nach oben und der Boden 3 erstreckt sich etwa in horizontaler Richtung. Dadurch ist es möglich, daß ein zu dem elektrischen Zahnreinigungsgerät gehörendes Handgerät mit einer zugeordneten Vertiefung auf den Stutzen 5 aufgesteckt werden kann.

Das Handgerät enthält einen Elektromotor, der von einem Akkumulator angetrieben ist. Mit dem Elektromotor können die Borsten eines Borstenteiles in Rotation versetzt werden. Ein Benutzer kann somit bei abgenommenem Handgerät mittels der rotierenden Borsten des Handgerätes seine Zähne reinigen.

Zum Wiederaufladen des Akkumulators muß der Benutzer das Handgerät auf den Stutzen 5 des Gehäuses 1 aufstecken. Mit Hilfe einer induktiven Übertragung wird dann elektrische Energie an das Handgerät weitergegeben. Zu diesem Zweck sind in dem Handgerät und in dem Gehäuse 1 entsprechende Mittel vorgesehen, zu denen im Gehäuse 1 eine Spule 6 gehört. Etwa parallel zu dem Boden 3 ist im Gehäuse 1 eine Leiterplatte 7 angeordnet, die sich etwa über die gesamte Öffnung des becherförmigen Oberteils 2 erstreckt. Auf der Leiterplatte 7 sind eine Anzahl von elektrischen Bauteilen 8 angeordnet, die mit der Leiterplatte 7 fest verlötet sind. Bei diesen elektrischen Bauteilen 8 handelt es sich beispielsweise um elektrische Widerstände, Kapazitäten, Transistoren, usw.

Insgesamt bilden die elektrischen Bauteile 8 eine elektrische Aufladevorrichtung zum Wiederaufladen des Akkumulators in dem bereits erwähnten Handgerät.

Die Leiterplatte 7 mit den elektrischen Bauteilen 8 ist mit Hilfe von Stützrippen 9 innerhalb des Gehäuses 1 fixiert. Die Stützrippen 9 stehen vom Oberteil 2 ab und erstrecken sich etwa in die gleiche Richtung wie die Becherform des Oberteiles 2.

Die Höhe des Oberteiles 2 ist derart gewählt, daß oberhalb der elektrischen Bauteile 8 ein freier Raum vorhanden ist, der noch näher beschrieben werden wird.

Ein elektrisches Kabel 10 ist fest mit der Leiterplatte 7 verbunden und dient dazu, der Aufladevorrichtung elektrische Energie beispielsweise in der Form einer Netzspannung zuzuführen, so daß die Leiterplatte 7 und die elektrischen Bauteile 8 im eingeschalteten Zustand stromführend sind.

Das elektrische Kabel 10 ist durch eine Kabelöffnung 11 hindurch aus dem Gehäuse 1 herausgeführt. Die Kabelöffnung 11 ist in einer Außenwand 12 der Becherform des Oberteiles 2 angeordnet, und zwar im Bereich des noch zu erläuternden freien Raumes des Oberteiles 2. Der Rand der Kabelöffnung 11 ist außen und innen stark gerundet, so daß keine scharfen oder spitzen Kanten vorhanden sind.

Bei der Herstellung des Gehäuses 1 wird zuerst die Leiterplatte 7 mit den elektrischen Bauteilen 8 einschließlich der Spule 6 und sonstiger Mittel zur induktiven Übertragung in das Oberteil 2 eingebracht. Das elektrische Kabel 10 wird durch die Kabelöffnung 11 hindurchgesteckt. Danach wird das Oberteil 2 mit Hilfe des Bodens 3 fest verschlossen.

Nunmehr wird das Gehäuse 1 in eine Einfüllposition gebracht, wie dies in der Fig. 1 gezeigt ist. In dieser Einfüllposition weist das Gehäuse 1 einen Einfüllwinkel a zur Horizontalen auf, der im beschriebenen Ausführungsbeispiel etwa 70 Grad bis 80 Grad beträgt. Dieser Einfüllwinkel a ist derart gewählt, daß die Kabelöffnung 11 sich in einer nahezu horizontalen Position befindet.

Im unteren Teil der Fig. 1 ist die Horizontale als Linie eingezeichnet, so daß sich der Einfüllwinkel a beispielsweise zwischen dieser Linie und dem Boden 3 befindet.

Verfahrenstechnisch wird der Einfüllwinkel a dadurch erreicht, daß das Gehäuse 1 auf einer Transportvorrichtung gehalten ist, mit der das Gehäuse 1 von einer Station zur nächsten Station der Herstellungsanlage transportiert wird, und daß diese Transportvorrichtung zusammen mit dem Gehäuse 1 eine entsprechende schiefe Ebene hinauf oder hinunterbewegt wird. Befindet sich das Gehäuse 1 auf der schiefen Ebene, so wird die Transportvorrichtung angehalten und die Einfüllposition ist erreicht.

In der Einfüllposition wird dem Gehäuse 1 eine Einfüllvorrichtung 13 zugestellt, bei der es sich beispielsweise um eine rohrförmige Einfülldüse handeln kann. Die Einfüllvorrichtung 13 wird nunmehr in die Kabelöffnung 11 eingeführt. Daraufhin wird eine flüssige Vergußmasse 14 mittels der Einfüllvorrichtung 13 in das Innere des Gehäuses 1 eingefüllt. Die Menge an einzufüllender Vergußmasse 14 ist beim vorliegenden Ausführungsbeispiel derart gewählt, daß das Innere des Gehäuses 1 etwa zur Hälfte mit Vergußmasse 14 ausgefüllt ist. Danach wird die Einfüllvorrichtung 13 wieder abgezogen.

Die horizontale Oberfläche der eingefüllten Vergußmasse 14 in der Einfüllposition, also bei geneigtem Gehäuse 1, ist in der Fig. 1 mit der Bezugsziffer 15 gekennzeichnet.

In einer ersten Ausführungsform wird das Gehäuse 1 nach dem Einfüllen mit der noch flüssigen Vergußmasse 14 in eine etwa horizontale Position gebracht, wie dies in der Fig. 2 gezeigt ist. Die Horizontale ist dabei im unteren Teil der Fig. 2 mit einer Linie angedeutet. Die Oberfläche der eingefüllten Vergußmasse 14 ist in der Fig. 2 mit der Bezugsziffer 16 gekennzeichnet. Diese Oberfläche 16 ist etwa parallel zu dem Boden 3 angeordnet und die elektrischen Bauteile 8 einschließlich der Leiterplatte 7 befinden sich in dem von der Vergußmasse 14 ausgefüllten Bereich des Gehäuses 1.

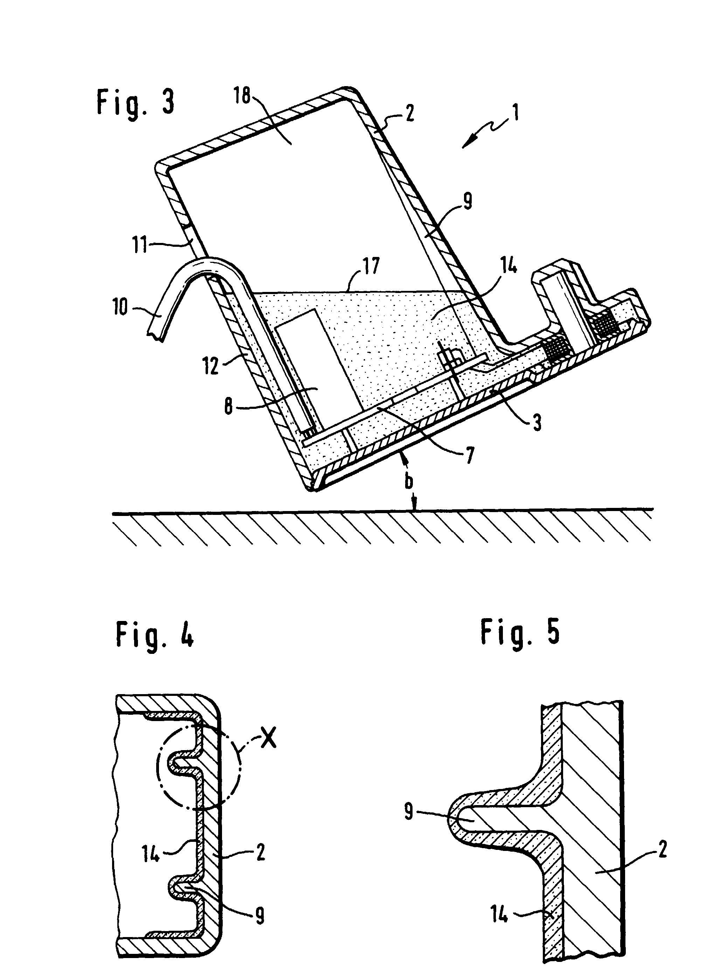

Bei einer zweiten Ausführungsform, die in der Fig. 3 gezeigt ist, wird das Gehäuse 1 nach dem Einfüllen mit der noch flüssigen Vergußmasse 14 in eine geneigt Position gebracht. In dieser Aushärtposition weist das Gehäuse 1 einen Neigungswinkel b zur Horizontalen auf, der im beschriebenen Ausführungsbeispiel etwa 40 Grad bis 50 Grad beträgt. Im unteren Teil der Fig. 1 ist die Horizontale als Linie eingezeichnet, so daß sich der Neigungswinkel b beispielsweise zwischen dieser Linie und dem Boden 3 befindet. Die Oberfläche der eingefüllten Vergußmasse 14 ist in der Fig. 3 mit der Bezugsziffer 17 gekennzeichnet. Die hohen elektrischen Bauteile 8 sind derart auf der Leiterplatte 7 angeordnet, daß sie nicht über die Oberfläche 17 hinausstehen. Im vorliegenden Ausführungsbeispiel sind die hohen elektrischen Bauteile 8 entsprechend der Fig. 3 im linken Bereich der Leiterplatte 7 angeordnet, so daß im rechten Bereich die Vergußmasse 14 eine geringere Höhe aufweisen kann. Die Leiterplatte 7 und die darauf angeordneten elektrischen Bauteile 8 befinden sich somit vollständig in dem von der Vergußmasse 14 ausgefüllten Bereich des Gehäuses 1.

Bei beiden beschriebenen Ausführungsformen wird das Gehäuse 1 in der in den Fign. 2 und 3 gezeigten Positionen abgestellt. Die flüssige Vergußmasse 14 kann nunmehr abkühlen und dadurch erstarren und aushärten. Dies ergibt letztendlich eine harte Vergußmasse 14 mit den in den Fign. 2 und 3 gezeigten Oberflächen 16 und 17. Die Vergußmasse 14 dient der Isolation der Leiterplatte 7 und der elektrischen Bauteile 8.

Verfahrenstechnisch wird die gewünschte Aushärtposition in den beiden beschriebenen Ausführungsformen dadurch erreicht, daß das Gehäuse 1 mit der Transportvorrichtung auf eine entsprechende Ebene bewegt und danach abgestellt wird. Bei der Ausführungsform nach der Fig. 2 wird die Transportvorrichtung mit dem Gehäuse 1 auf einer horizontalen Ebene abgestellt und in der Ausführungsform nach der Fig. 3 auf einer schiefen Ebene, die den Neigungswinkel b zur Horizontalen aufweist.

Bei beiden in den Fign. 2 und 3 beschriebenen Ausführungsformen ergibt sich im Inneren des Oberteils 2 der bereits erwähnte freie Raum. Dieser freie Raum stellt einen Kabelstauraum 18 dar, in den das elektrische Kabel 10 durch die Kabelöffnung 11 eingeführt oder herausgeholt werden kann.

In den Fign. 4 und 5 sind die Stützrippen 9 gezeigt. Wie aus der Fig. 1 hervorgeht, werden die Stützrippen 9 beim Einfüllen der flüssigen Vergußmasse 14 vollständig von der Vergußmasse 14 umgeben. Dies hat zur Folge, daß auch nach dem Zurückkippen des Gehäuses 1 von der Einfüllposition in die Aushärtposition die Stützrippen 9 mit einer dünnen Schicht der Vergußmasse 14 versehen bleiben. Aufgrund der Oberflächenspannung der flüssigen Vergußmasse 14 ergibt dies eine ungleichmäßige Dicke der auf den Stützrippen 9 befindlichen Schicht der Vergußmasse 14. Dies wiederum hat zur Folge, daß die Höhe der Stützrippen 9 geringer und die Radien der Stützrippen 9 zu den Flächen des Gehäuses 1 größer werden. Die Stützrippen 9 weisen dadurch keine scharfen oder spitzen Kanten auf.

## Patentansprüche

1. Gehäuse (1) für ein elektrisches Gerät zur Körperpflege, insbesondere für ein Zahnreinigungsgerät, wobei in dem Gehäuse von einer Vergußmasse (14) durch Einfüllen der Vergußmasse in das Gehäuse umgebene, elektrische Bauteile (8) untergebracht sind, die mit einem elektrischen Kabel (10) verbunden sind, das durch eine Kabelöffnung (11) des Gehäuses (1) hindurchgesteckt ist, dadurch gekennzeichnet, daß die Kabelöffnung (11) in einer Außenwand (12) des Gehäuses (1) angeordnet ist und die einzige Öffnung des Gehäuses (1) zu den elektrischen Bauteilen (8) darstellt.

2. Gehäuse (1) nach Anspruch 1, dadurch gekennzeichnet, daß die Vergußmasse (14) bei stehendem Gehäuse (1) eine Oberfläche (16) aufweist, die etwa horizontal angeordnet ist.

3. Gehäuse (1) nach Anspruch 1, dadurch gekennzeichnet, daß die Vergußmasse (14) bei stehendem Gehäuse (1) eine Oberfläche (17) aufweist, die unter einem Neigungswinkel (b) zur Horizontalen angeordnet ist.

4. Gehäuse (1) nach einem der Ansprüche 1 bis 3, dadurch gekennzeichnet, daß im Inneren des Gehäuses (1) Stützrippen (9) vorgesehen sind, die zumindest teilweise mit Vergußmasse (14) beschichtet sind.

5. Gehäuse (1) nach einem der Ansprüche 1 bis 4, dadurch gekennzeichnet, daß das elektrische Gerät zur Körperpflege einen wiederaufladbaren Akkumulator enthält und daß die elektrischen Bauteile (8) zu einer elektrischen Aufladevorrichtung gehören.

6. Verfahren zum Herstellen des Gehäuses (1) nach einem der Ansprüche 1 bis 5, dadurch gekennzeichnet, daß die Vergußmasse (14) mittels einer Einfüllvorrichtung (13) durch die Kabelöffnung (11) hindurch in das Gehäuse (1) eingebracht wird.

7. Verfahren nach Anspruch 6, dadurch gekennzeichnet,daß das Gehäuse (1) zum Einfüllen der Vergußmasse (14) mittels einer Transportvorrichtung in eine Einfüllposition gebracht wird, die einen Einfüllwinkel (a) zur Horizontalen aufweist (Fig. 1).

8. Verfahren nach Anspruch 6 oder 7, dadurch gekennzeichnet, daß das Gehäuse (1) zum Aushärten der Vergußmasse (14) mittels der Transportvorrichtung in eine etwa horizontale Position gebracht wird (Fig. 2).

9. Verfahren nach Anspruch 6 oder 7, dadurch gekennzeichnet, daß das Gehäuse (1) zum Aushärten der Vergußmasse (14) mittels der Transportvorrichtung in eine Position gebracht wird, die einen Neigungswinkel (b) zur Horizontalen aufweist (Fig. 3).

10. Verfahren nach einem der Ansprüche 7 bis 9, dadurch gekennzeichnet, daß das Gehäuse (1) auf einer entsprechenden schiefen Ebene abgestellt wird.

## Claims

1. A housing (1) for an electric body-care apparatus, in particular for a dental cleansing apparatus, wherein electric components (8) are accommodated in the housing interior and surrounded by a casting compound (14) that is filled into the housing, said components being connected to an electric cable (10) inserted through a cable opening (11) provided in the housing (1), **characterized in that** the cable opening (11) is positioned in an outer wall (12) of the housing (1) and is the only opening of the housing (1) to the electric components (8).

2. The housing (1) as claimed in claim 1, **characterized in that**, with the housing (1) in an upright position, the surface (16) of the casting compound (14) is approximately horizontal.

3. The housing (1) as claimed in claim 1, **characterized in that**, with the housing (1) in an upright position, the surface (17) of the casting compound (14) extends at an angle of inclination (b) to the horizontal.

4. The housing (1) as claimed in any one of the claims 1 to 3, **characterized in that** the interior of the housing (1) is provided with support ribs (9) which are coated at least partly with casting compound (14).

5. The housing (1) as claimed in any one of the claims 1 to 4, **characterized in that** the electric body-care apparatus contains a rechargeable storage battery, and that the electric components (8) form part of an electric charging device.

6. A method of manufacturing the housing (1) as claimed in any one of the claims 1 to 5, **characterized in that** the casting compound (14) is filled into the housing (1) through the cable opening (11) by means of a filling device (13).

7. The method as claimed in claim 6, **characterized in that** the housing (1) is positioned for filling with the casting compound (14) by means of a handling device which moves the housing into a filling position set at a filling angle (a) relative to the horizontal (FIG. 1).

8. The method as claimed in claim 6 or 7, **characterized in that**, to allow the casting compound (14) to harden, the housing (1) is moved by means of the handling device into an approximately horizontal position (FIG. 2).

9. The method as claimed in claim 6 or 7, **characterized in that**, to allow the casting compound (14) to harden, the housing (1) is moved by means of the handling device into a position set at an angle of inclination (b) relative to the horizontal (FIG. 3).

10. The method as claimed in any one of the claims 7 to 9, **characterized in that** the housing (1) is parked on a suitably sloping plane.

## Revendications

1. Boîtier (1) pour un appareil électrique pour l'hygiène corporelle, en particulier pour un appareil d'hygiène dentaire, dans lequel, dans le boîtier, sont logés des composants électriques (8) qui sont entourés d'une masse de remplissage (14) par versement de la masse de remplissage dans le boîtier et sont reliés à un câble électrique (10) qui s'enfile par une ouverture (11) du boîtier (1) pour câble, caractérisé par le fait que l'ouverture (11) pour câble est disposée dans une paroi extérieure (12) du boîtier (1) et représente l'unique ouverture du boîtier (1) en direction des composants électriques (8).

2. Boîtier (1) selon la revendication 1, caractérisé par le fait que, le boîtier (1) étant vertical, la masse de remplissage (14) présente une surface (16) qui est disposée à peu près horizontalement.

3. Boîtier (1) selon la revendication 1, caractérisé par le fait que, le boîtier (1) étant vertical, la masse de remplissage (14) présente une surface (17) qui est disposée sous un certain angle d'inclinaison (b) par rapport à l'horizontale.

4. Boîtier (1) selon l'une des revendications 1 à 3, caractérisé par le fait qu'à l'intérieur du boîtier (1) sont prévues des nervures de soutien (9) qui sont au moins partiellement recouvertes de la masse de remplissage (14).

5. Boîtier (1) selon l'une des revendications 1 à 4, caractérisé par le fait que l'appareil électrique pour l'hygiène corporelle contient un accumulateur rechargeable et que les composants électriques (8) font partie d'un dispositif de charge électrique.

6. Procédé de fabrication du boîtier (1) selon l'une des revendications 1 à 5, caractérisé par le fait que l'on charge la masse de remplissage (14) dans le boîtier (1) au moyen d'un dispositif de remplissage (13), par l'ouverture (11) pour câble.

7. Procédé selon la revendication 6, caractérisé par le fait que, pour verser la masse de remplissage (14), on amène le boîtier (1), au moyen d'un dispositif de transport, dans une position de remplissage qui présente un angle de remplissage (a) par rapport à l'horizontale (figure 1).

8. Procédé selon la revendication 6 ou 7, caractérisé par le fait que pour le durcissement de la masse de remplissage (14), on amène le boîtier (1), au moyen du dispositif de transport, dans une position à peu près horizontale (figure 2).

9. Procédé selon la revendication 6 ou 7, caractérisé par le fait que pour le durcissement de la masse de remplissage (14), on amène le boîtier (1), au moyen du dispositif de transport, dans une position qui présente un angle d'inclinaison (b) par rapport à l'horizontale (figure 3).

10. Procédé selon l'une des revendications 7 à 9, caractérisé par le fait que l'on pose le boîtier (1) sur un plan incliné approprié.
